# NEW EUROPEAN PATENT SPECIFICATION

(11) **EP 0 287 587 B2**
(45) Date of publication and mention of the opposition decision: **12.11.1997**
(45) Mention of the grant of the patent: 18.12.1991
(21) Application number: 87906288.3
(22) Date of filing: 21.09.1987
(51) Int. Cl.: B60H 1/24

(54) **ARRANGEMENT FOR PREVENTING MIST AND ICE FORMATION ON THE SIDE WINDOW OF A MOTOR VEHICLE**
VORRICHTUNG ZUM VERHINDERN DES BESCHLAGENS UND DER EISBILDUNG AUF FAHRZEUGSEITENFENSTERN
DISPOSITIF SERVANT A EMPECHER LA FORMATION DE BUEE ET DE GIVRE SUR LA FENETRE LATERALE D'UN VEHICULE A MOTEUR

(30) Priority: 01.10.1986 SE 8604163
(43) Date of publication of application: 26.10.1988
(73) Proprietor: SAAB AUTOMOBILE AKTIEBOLAG, 461 80 Trollhättan (SE)
(72) Inventor: NILSSON, Sten, S-462 00 Vänersborg (SE)
(74) Representative: Holmborn, Erland Karl
(86) International application number: PCT/SE87/00422
(87) International publication number: WO 88/02318

(56) References cited:
- DE-B- 2 124 304
- DE-C- 2 750 671
- JP-A- 608 110
- JP-U- 5 016 348
- US-A- 4 512 240

## Description

The present invention relates to arrangement for preventing mist and ice formation on a side window in a door of a motor vehicle, said door comprising an outer bodywork panel and an inner sound absorbing inside wall panel and to which window is connected at least one air supply duct with an outlet located at the bottom part of the window, via which duct and outlet air is fed from a fan arranged in the door below the window between the outer bodywork panel of the door and the inside-wall panel of the door and the fan draws air from an inlet, which is located in the inside-wall panel towards the vehicle interior.

It is a generally known problem that the window of a vehicle easily become misted and even ice up when the vehicle is used in cold weather. The ventilation system of the vehicle is rated so as to quickly free the vehicle windscreen of mist and ice, and air is also generally supplied to the adjacent front side-windows to quickly achieve good visibility through the latter.

From Swedish Patent Specification 209924 it is also known to supply air from a mixing box arranged in the front part of a vehicle to all the windows of the vehicle. The disadvantage of the said solution is the requirement for long air ducts and a plurality of connection couplings, which result in high pressure drops and risks of leakage. In order to achieve the effect of distinctly improving the visibility in the event of misted windows in the latter case, an extremely high fan capacity is required. To achieve this with only one large fan located centrally in the vehicle involves difficulties from the viewpoint of space, noise, etc.

Keeping the rear side-windows of a vehicle free of mist is especially problematic. One proposal, known from DE-A-2750671, for solving this problem involves arranging a smaller fan in the centre pillar of the vehicle in order to supply air through the pillar and to blow the air out towards the adjacent rear side-window. However, the solution requires special measures to be taken in a load-bearing part of the vehicle bodywork and also involves other disadvantages, such as those related to the possibility of simple installation of the air ducts and fan.

Another solution is known from JP-UM-16348/75, wherein a fan mounted inside a vehicle door uses the entire space between the outer door panel and inner door panel as a ventilation duct. The door panels constitute the actual channel walls of the air duct and in this space the fan is mounted for propelling the air upwards and towards the window. The outlet duct of the arrangement is defined by the clearance between window and innerdoor panel, running along the whole bottom part of the window. This solution reveals several disadvantages, as;
- during defrosting mode, the air will be considerably chilled by the outer door panel, hereby decreasing the defrosting effect. Satisfactory defrosting effect will not be attained unless the heating coil and fan are overdimensioned in relation to the window-defrosting need, giving more expensive solution,
- there is a considerable risk of air leakage through mounting holes and through-put holes for different accessories such as ashtray, crankhandles etc in the door. Such leakage will decrease the defrosting effect.
- the fan motor will be exposed to moisture and possible leakage of water between window and outer door panel or through other through-put holes. This calls for a costly fan motor sealing arrangement.
- the velocity of the air streaming out over the window from the door air duct will be greatly reduced due to the large flow area, whereby the defrosting effect decreases,
- the inside support of the bottom part of the raisable side window in the door will be diminished or must be solved by more complicated and more expensive features.

Still another solution is shown in JP-A-60-8110, which shows a fan unit arranged in the side door of an automobile. However the fan unit has no inlet duct but a mere fan housing opening towards the vehicle interior and its mounting in an automobile door is not given any closer disclosure.

The object of the present invention is to achieve a simple and improved arrangement for keeping windows in a vehicle mist- and ice-free, especially the rear side-windows of a conventional passenger car. Other objects of the invention are to reduce the necessary mounting time for the arrangement at the assembly line of the car, while giving the arrangement a more moisture protected location as well as a mounting which will reduce transmission of vibration/noise from the fan-unit to surrounding bodywork. For this purpose the present invention is characterized in that the fan is connected with the inlet through an inlet duct,that the fan, the outlet duct and the inlet duct constitute a single integral unit formed as a common housing in which the fan is mounted and that the housing is secured to the inside-wall panel, between the inside-wall panel and a reinforcing structure located between the inside wall panel and the outer bodywork panel of the door, which inside wall panel towards the interior has preformed inward projecting wall parts in which the unit is fitted.

The invention gives the opportunity to preassemble the fan unit onto the prefabricated inner inside-wall panel. The panel with its fan unit secured on it could then be delivered to the car assembly line as one unit and the whole unit could then be secured to the door. This will reduce the necessary handling time at the car assembly line which is of importance for manufacturing a car at reasonable costs. The fan unit is also easily serviceable after a disassembly of the inner inside-wall panel.

When assembled between the reinforcing sheet metal structure and the sound absorbing inner insidewall panel, the invention gives a more moisture protected location of the fan unit especially when, as is common practice, a plastic foil is glued to the reinforcing structure as a diffusion barrier before the sound absorbing panel is secured to the door, protecting the sound absorbing panel and its upholstering from absorbing moisture and becoming discoloured.

The invention will also effectively suppress vibrations from the fan unit thereby preventing the vibrations from reaching more sound conductive door members, which is important from a noise comfort view. A conventional inner inside-wall panel advantageously made out of wood fibre, is much more resistant against transmission of vibrations than sheet metal due to the relatively high internal dampening of the wood fibre material as such.

In an advantageous embodiment of the invention the unit is mounted in a rear door of the vehicle, wherein the invention is chararterized in that the fan and the outlet duct are arranged in the front part of the door with the air outlet arranged at the bottom front part of the window and in that the outlet is provided with air-directing surfaces which guide the air from the outlet obliquely upwards, backwards and inwards towards the window.

By positioning the outlet close to the bottom front part of the window and also by designing it with air-directing surfaces which guide the outlet air obliquely upwards, backwards and inwards towards the window, an advantageous location from the viewpoint of installation in the door can be combined with guidance of air which is effective from the point of view of visibility.

Other features chararterizing the invention emerge from the attached patent claims and the following description of an advantageous embodiment of the invention. In the description, reference is made to the attached figures in which
Figure 1 illustrates schematically an arrangement according to the invention in a rear door of a motor vehicle,
Figure 2 illustrates schematically the arrangement according to the invention essentially according to a cross-section A-A in Figure 1,
Figure 3 shows an advantageous embodiment of the air outlet of the arrangement according to the invention viewed from above and
Figures 4a, 4b show outlets essentially according to section B-B and section C-C in Figure 3.

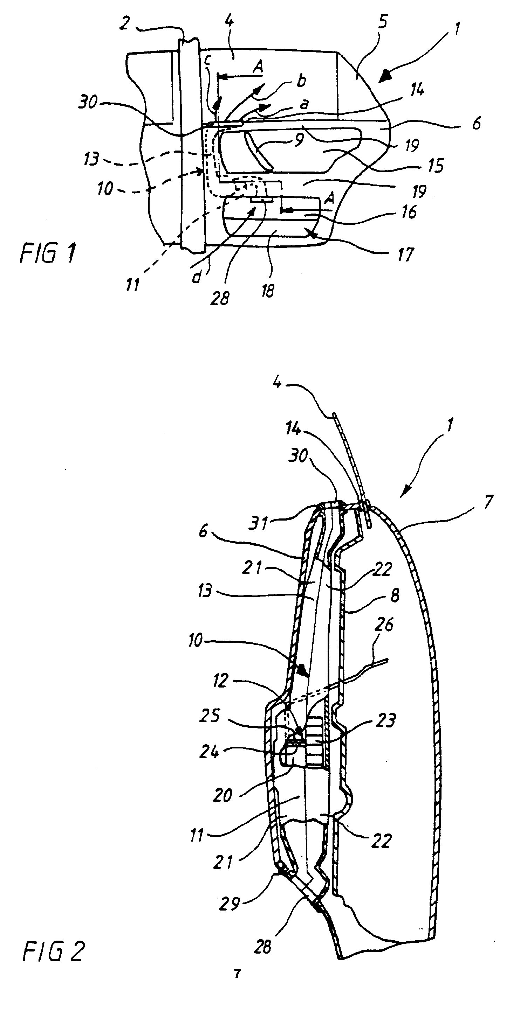

Figure 1 shows a rear door 1 located directly behind the centre pillar 2 in a conventional passenger car. Door 1 has a window 4 which opens and closes vertically and a fixed window 5 together with an inner panel 6, facing towards the vehicle interior, and made of moulded wood fibre material, which panel is fixed to door 1 otherwise made of sheet metal. Figure 2 shows schematically how door 1 comprises an outer sheet metal panel 7 and an inner reinforcing sheet-metal structure 8 welded thereto, to which is secured, in addition to inner panel 6, a door handle 9 and (not shown) arrangements for a door lock and a window regulator crank.

Ventilation unit 10 according to the invention is secured to the said inner panel 6 in a location in the front part of the door. Ventilation unit 10 consists of an integral unit comprising inlet duct 11, fan 12 and outlet duct 13. Outlet duct 13 has an outlet dose to the front part of bottom edge 14 of window 4, while inlet duct 11 has an inlet in the bottom part of the door. The run of the said ducts is adapted to the design of inner door panel 6. Inner panel 6 is in fact designed with a top and a bottom part, 15 and 16, pressed in towards the outside of door 1, of which parts the top contains the handle 9 and locking mechanism (not shown) while the bottom forms a storage poet 17 together with a wall element 18 located inside and facing towards the interior. The said top and bottom parts 15 and 16 are surrounded by beam-like projections in inner panel 6 which face towards the interior. The shape of ventilation unit 10 is matched to the said projections 19, for which reason it receives a well-protected location also in terms of the sound insulation of ventilation unit 10 relative to the interior.

Ventilation unit 10 consists of two housing halves 21 and 22 formed of plastic material with an essentially vertical joint face which essentially runs in or parallel to the longitudinal plane of symmetry of ducts 11, 13. Housing halves 21, 22 are attached to each other by means of snap elements (not shown) and thus also accommodate fan 12, which consists of electric motor 20 which drives impeller 23. Motor 20 is elastically mounted in rubber support 24 which in turn rests against a surrounding bearing housing 25 formed in the one housing half 21. Via cable 26 the motor obtains the necessary electrical energy from a controllable electric circuit (not shown).

The inlet to and the outlet from the ventilation unit pass through openings in the inner panel and are thus provided with inlet and outlet nozzles 28 and 30. Nozzles 28, 30 constitute separate parts which, with outer edges 29 and 31, rest against the surface of inner panel 6 that faces towards the interior, at the same time as they are connected to the outlet and inlet respectively of ducts 11, 13. Furthermore, nozzles 28, 30 are secured to ducts 11, 13 by means of snap and/or separate fasteners 32.

Outlet duct 13 together with the nozzle 30 provides the discharge air with a direction which is obliquely inwards towards rear side-window 4. The latter is, in a manner customary in modem cars, slightly curved and angled in such a way that its upper part is located closer to the centre of the vehicle than its lower part. This means that the direction of discharge of the air is generally almost vertical or even - as shown in Figure 2 - at a slight angle inwards towards the interior.

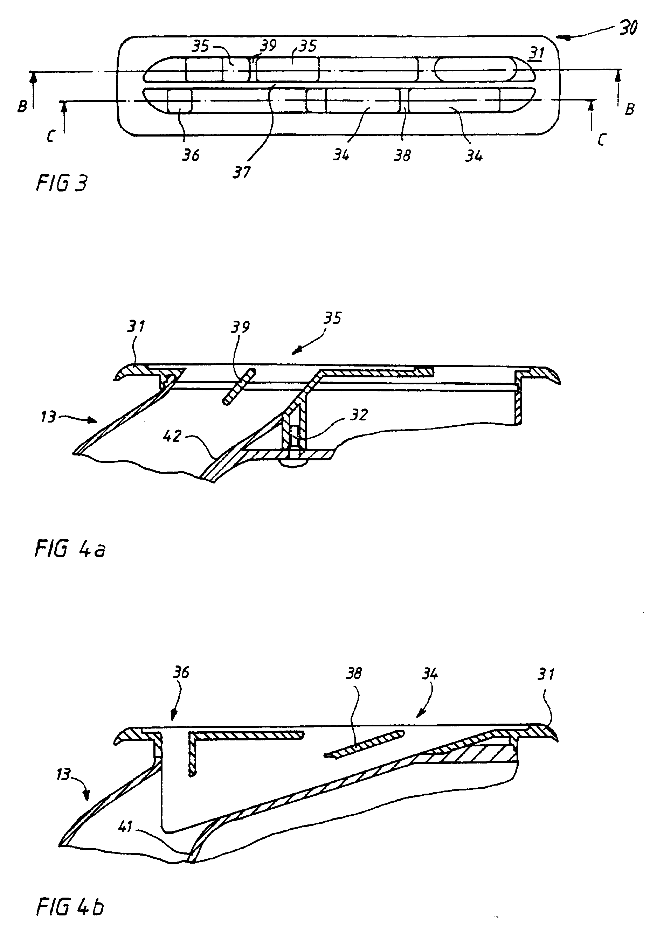

Outlet nozzle 30 shown in Figures 3, 4a and 4b guides the discharge air through three nozzles 34, 35 and 36, separated from each other, of which two 34, 36 are separated from the third 35 by a longitudinal central wall 37. The said two nozzles 34, 36 are situated further from window 4 than the third nozzle 35 and they are moreover located in the longitudinal direction on both sides of the third nozzle 35, viewed towards the front of the vehicle.

The first and second nozzles 34, 35 each have a central guide plate 38 and 39 respectively, which, together with connecting envelope surfaces 41 and 42 respectively from the corresponding design of outlet duct 13 in the respective ventilation housing half 21, 22, gives the discharge air a predetermined direction. First nozzle 34 thus gives the air a direction corresponding to arrow a in Figure 1 and has a smaller angle relative to the horizontal plane than second nozzle 35. The direction of air flow from the said second nozzle 35 is shown by arrow b in Figure 1. The third nozzle 36 consists of an essentially vertical hole which gives the exhaust air a corresponding vertical direction corresponding to arrow c in Figure 1. The design of outlet nozzle 30 thus provides several separate air streams which, without disturbing each other to any great extent, flow over the whole window 4. By this means, a completely mist-free window is achieved in a relatively short time, starting at a central front part at eye-level of the back seat passenger.

In addition, inlet 28 of ventilation unit 10 is advantageously located in such a way as to capture an air stream (arrow d) from the ventilation air ducts which, in passenger cars, usually discharge under the front seats. The said air stream d originates from the regular ventilation system (not shown here) of the vehicle and supplies, when required, heated air to the foot-wells for the back seat passengers. The ventilation unit according to the invention can consequently capture the heated air and convey it further at increased pressure to the rear side-window, which consequently increases the possibility of quickly achieving good visibility through the latter. Nor, of course, should the possibility be excluded here of incorporating separate electrical heating in ventilation unit 10.

The electrical control of fan 12 of ventilation unit 10 can expediently be carried out at the same time as the control of the fan of the regular ventilation system. It can also follow switching of an electric heating arrangement for the rear window of the vehicle and/or a separate switch on the corresponding door. It is also possible to control the fan by a sensor which senses the presence of mist.

The exemplary embodiment described should not thus be regarded as limiting the present invention, but rather it can be modified in a number of embodiments within the scope of the patent claims which follow.

## Claims

1. Arrangement for preventing mist and ice formation on a side window (4) in a door (1) of a motor vehicle, said door (1) comprising an outer bodywork panel (7) and an inner sound absorbing inside wall panel (6) and to which window (4) is connected at least one air supply duct (13) with an outlet (30) located at the bottom part of the window (4) via which duct (13) and outlet air is fed from a fan (12) arranged in the door below the window (4) between the outer bodywork panel (7) and the inside wall panel (6) of the door (1) and the fan draws air from an inlet (28), which is located in the inside wall panel (6) towards the vehicle interior, characterised in that the fan is connected with the inlet through an inlet duct (11), that the fan (12), the outlet duct (13) and the inlet duct (11) constitute a single integral unit (10) formed as a common housing in which the fan (12) is mounted and that the housing is secured to the inside wall panel (6) between the inside wall panel (6) and a reinforcing structure (8) located between the inside wall panel (6) and the outer bodywork panel (7) of the door (1), which inside wall panel (6) towards the interior has preformed inward projecting wall parts (19) in which the unit (10) is fitted.

2. Arrangement according to Claim 1 mounted in a near vehicle-door (1), characterized in that the fan (12) and the outlet duct (13) are arranged in the front part of the door with the air outlet (30) arranged at the bottom front part of the window and in that the outlet (30) is provided with air-directing surfaces (38,39) which guide the air from the outlet (30) obliquely upwards, backwards and inwards towards the window (4).

3. Arrangement according to Claim 2, characterized in that the unit(10) comprises two housing halves (21,22) with a dividing plane essentially vertical and parallell to the longitudinal plane of symmetry of the ducts (11,13), an electric fan motor (20) elastically mounted in one housing half together with an impeller (23) attached to the drive shaft of the fan motor and accommodated between the housing halves (21,22).

4. Arrangement according to Claim 3, characterized in that the outlet(30) comprises a first nozzle (34) in the one housing half (21) and a second nozzle (35) in the second housing half (22), which first and second nozzles (34,35) are separated by a wall (37) located essentially in the joint face.

5. Arrangement according to Claim 4, characterized in that the first nozzle (34) is provided with air-directing surfaces (38,41) which give the outlet air a direction which the outlet air obtains from the air-directing surfaces (39,42) located in the second nozzle (35).

6. Arrangement according to Claim 5, characterized in that the first nozzle (34) is located to a substantial extent behind the second nozzle (35).

7. Arrangement according to Claim 6, characterized in that the second nozzle (35) is located closer to the window (4) than the first nozzle (34) and directs the exhaust air obliquely backwards at a greater angle relative to the horizontal plane than the first nozzle (34).

## Patentansprüche

1. Vorrichtung zum Verhindern des Beschlagens und der Eisbildung auf einem Fahrzeugseitenfenster (4) in einer Tür (1) eines Kraftfahrzeugs, wobei die Tür (1) ein äußeres Karosserieblech (7) und eine innere schallabsorbierende Innerverkleidung (6) aufweist und wobei an das Fenster (4) zumindest ein Luftführungskanal (13) mit einem am unteren Teil des Fensters gelegenen Auslaß angeschlossen ist, durch welchen Kanal (13) und Auslaß Luft durch einen Ventilator (12) geführt wird, der in der Türseite unterhalb des Fensters (4) zwischen dem äußeren Karosserieblech (7) der Tür und der Innenverkleidung (6) der Tür angeordnet ist und wobei der Ventilator (12) Luft aus einem Einlaß (28) saugt, welchen Einlaß in der schallabsorbierenden Innenverkleidung (6) auf der Fahrzeuginnenseite angeordnet ist, dadurch gekennzeichnet, daß der Ventilator (12) mit dem Einlaß durch einen Einlaßkanal (11) verbunden ist, daß der Ventilator (12), der Auslaßkanal (13) und der Einlaßkanal (11) eine einzige einstückige Einheit (10) bilden, die als gemeinsames Gehäuse geformt ist, in das der Ventilator eingebaut ist, und daß das Gehäuse an der schallabsorbierenden Innenverkleidung (6) zwischen der Innenverkleidung (6) und einer zwischen der Innenverkleidung (6) und dem äußeren Karosseriblech (7) angeordneten Verstärkung (8) befestigt ist, welche Innenverkleidung in den Innenraum weisende, vorgeformte, nach innen ragende Abschnitte (19) aufweist, in die die Einheit (10) eingepaßt ist.

2. Vorrichtung nach Anspruch 1, eingebaut in eine hintere Fahrzeugtür (1), dadurch gekennzeichnet, daß der Ventilator (12) und der Auslaßkanal (13) im vorderen Teil der Tür und der Luftauslaß (30) am unteren vorderen Teil des Fensters angeordnet sind und daß der Auslaß (30) Luftleitflächen (38, 39) aufweist, die die Luft vom Auslaß (30) schräg nach oben, nach hinten und nach innen in Richtung auf das Fenster (4) leiten.

3. Vorrichtung nach Anspruch 2, dadurch gekennzeichnet, daß die Einheit (10) zwei Gehäusehälften (21, 22) aufweist, mit einer im wesentlichen vertikal und parallel zur Längssymmetrieebene der Kanäle (11, 13) angeordneten Trennfläche, einen elektrischen Ventilatormotor (20), der elastisch in einer Gehäusehälfte zusammen mit einem auf der Antriebswelle des Ventilatormotors angebrachten Propeller (23) elastisch eingebaut und zwischen den Gehäusehälften (21, 22) aufgenommen ist.

4. Vorrichtung nach Anspruch 3, dadurch gekennzeichnet, daß der Auslaß (30) eine erste Düse (34) in der einen Gehäusehälfte (21) und eine zweite Düse (35) in der zweiten Gehäusehälfte (22) aufweist, welche ersten und zweiten Düsen (34, 35) durch eine im wesentlichen in der Verbindungsfläche liegende Wand (37) getrennt sind.

5. Vorrichtung nach Anspruch 4, dadurch gekennzeichnet, daß die erste Düse (34) Luftleitflächen (38, 41) aufweist, die der austretenden Luft eine Richtung geben, die die austretende Luft von den in der zweiten Düse (35) angeordneten Luftleitflächen (39, 42) erhält.

6. Vorrichtung nach Anspruch 5, dadurch gekennzeichnet, daß die erste Düse (34) zu einem wesentlichen Teil hinter der zweiten Düse (35) angeordnet ist.

7. Vorrichtung nach Anspruch 6, dadurch gekennzeichnet, daß die zweite Düse (35) näher am Fenster (4) als die erste Düse (34) angeordnet ist und die austretende Luft bezüglich der Horizontalebene in einem größeren Winkel schräg nach hinten leitet als die erste Düse (34).

## Revendications

1. Dispositif destiné à empêcher la formation de buée et de givre sur une fenêtre latérale (4) dans une porte (1) d'un véhicule à moteur, ladite porte (1) comportant un panneau de carrosserie extérieur (7) et un panneau intérieur de paroi intérieure insonorisant (6) et au moins une conduite d'alimentation en air (13) avec une sortie (30) disposée au niveau de la partie inférieure de la fenêtre étant reliée à la fenétre (4), de l'air étant amené par l'intermédiaire de la conduite (13) et de la sortie depuis un ventilateur (12) disposé dans la porte sous la fenêtre (4) entre le panneau de carrosserie extérieur (7) et le panneau intérieur de paroi intérieure (6) de la porte et le ventilateur (12) aspirant de l'air d'une entrée (28), qui étant située dans le panneau de paroi intérieure (6) en direction de l'intérieur du véhicule, caractérisé en ce que le ventilateur est relié à l'entrée par la conduite d'entrée (11), en ce que le ventilateur (12), la conduite de sortie (13) et la conduite d'entrée (11) constituent une unité d'un seul bloc (10) réalisée sous la forme d'un boîtier commun dans lequel est monté le ventilateur et en ce que le boîtier etant fixé audit panneau intérieur de paroi intérieure insonorisant (6), entre le panneau de paroi intérieure (6) et une structure de renforcement (8) disposée entre le panneau de paroi intérieure (6) et le panneau de carrosserie extérieur (7) de la porte (1), le panneau de paroi intérieure qui en direction de l'intérieur, possède des parties préformées de paroi se projetant vers l'intérieur (19) dans lesquelles est montée l'unité (10).

2. Dispositif selon la revendication 1 monté dans une porte arrière de véhicule (1), caractérisé en ce que le ventilateur (12) et la conduite de sortie (13) sont disposés dans la partie avant de la porte avec la sortie d'air (30) disposée au niveau de la partie avant inférieure de la fenêtre et en ce que la sortie (30) est pourvue de surfaces d'orientation d'air (38, 39) qui guident l'air depuis la sortie (30) obliquement vers le haut, vers l'arrière et vers l'intérieur en direction de la fenêtre (4).

3. Dispositif selon la revendication 2, caractérisé en ce que l'unité (10) comporte deux moitiés de boîtier (21, 22) avec un plan de séparation essentiellement vertical et parallèle au plan longitudinal de symétrie des conduites (11, 13), un moteur électrique de ventilateur monté élastiquement dans une moitié de boîtier avec une turbine (23) fixée à l'arbre d'entraînement du moteur de ventilateur et logée entre les moitiés de boîtier (21,22).

4. Dispositif selon la revendication 3, caractérisé en ce que la sortie (30) comporte une première bouche (34) dans une moitié de boîtier (21) et une deuxième bouche (35) dans la deuxième moitié de boîtier (22), les premiére et deuxième bouches (34, 35) étant séparées par une paroi (37) disposée essentiellement dans le plan de joint.

5. Dispositif selon la revendication 4, caractérisé en ce que la première bouche (34) est pourvue de surfaces d'orientation d'air (38, 41) qui donnent à l'air de sortie une orientation que l'air de sortie reçoit des surfaces d'orientation d'air (39, 42) disposées dans la deuxième bouche (35).

6. Dispositif selon la revendication 5, caractérisé en ce que la première bouche (34) est disposée sur une étendue substantielle derrière la deuxième bouche (35).

7. Dispositif selon la revendication 6, caractérisé en ce que la deuxième bouche (35) est disposée plus près de la fenêtre (4) que la première bouche (34) et dirige l'air refoulé obliquement vers l'arrière suivant un angle plus grand par rapport au plan horizontal que la première bouche (34).
